Europäisches Patentamt

**European Patent Office**

**Office européen des brevets**

(19)

(11) **EP 0 960 324 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(21) Anmeldenummer: **98964368.9**

(22) Anmeldetag: **27.11.1998**

(51) Int Cl.⁷: **G01L 23/22**

(86) Internationale Anmeldenummer:
**PCT/DE1998/003492**

(87) Internationale Veröffentlichungsnummer:
**WO 1999/031476 (24.06.1999 Gazette 1999/25)**

(54) **VERFAHREN ZUR ÜBERWACHUNG UND FEHLERERKENNUNG**

METHOD FOR MONITORING AND ERROR RECOGNITION

PROCEDE DE SURVEILLANCE ET DE DETECTION DE DEFAUT

(84) Benannte Vertragsstaaten:
**DE FR GB IT**

(30) Priorität: **17.12.1997 DE 19756081**

(43) Veröffentlichungstag der Anmeldung:
**01.12.1999 Patentblatt 1999/48**

(73) Patentinhaber: **ROBERT BOSCH GMBH**
**70442 Stuttgart (DE)**

(72) Erfinder:
• **TORNO, Oskar**
**D-71701 Schwieberdingen (DE)**
• **KLUTH, Carsten**
**D-70469 Stuttgart (DE)**

• **HÄMING, Werner**
**D-74861 Neudenau (DE)**
• **SURJADI, Iwan**
**D-71665 Vaihingen (DE)**
• **FRANKE, Steffen**
**0000 Brentwood Essex CM 14 5BT (GB)**
• **BÄUERLE, Michael**
**D-71706 Markgröningen (DE)**

(56) Entgegenhaltungen:
**EP-A1- 0 720 007      WO-A1-95/08760**
**US-A- 4 418 567       US-A- 4 462 362**
**US-A- 4 521 769       US-A- 4 593 553**
**US-A- 4 821 194       US-A- 4 981 124**
**US-A- 5 522 254**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Überwachung und Fehlererkennung, insbesonders bei einer Einrichtung zur Klopferkennung bei einer Brennkraftmaschine, nach der Gattung des Hauptanspruchs.

Stand der Technik

Es ist bekannt, daß bei Brennkraftmaschinen mit Klopfregelung der Klopfsensor sowie die zugehörige Signalaufbereitungsschaltung auf Funktionsfähigkeit überwacht werden müssen. Es besteht ansonsten die Gefahr, daß bei Ausfall des Klopfsensors oder bei einem Defekt in der zugehörigen Auswerteschaltung Klopfen nicht erkannt wird und der Arbeitspunkt der Brennkraftmaschine in ungewollter Weise in den klopfenden Bereich verschoben wird, was zu einer Gefährdung der Brennkraftmaschine führen kann. Es werden deshalb im Zusammenhang mit Einrichtungen zur Klopferkennung Verfahren zur Fehlererkennung vorgeschlagen, die eine zuverlässige Fehlfunktion des Klopfsensors oder der Auswerteschaltung erkennen lassen.

In der internationalen Patentanmeldung WO-A-95 08760 wird ein Verfahren zur Fehlererkennung bei einer Einrichtung zur Klopferkennung bei einer Brennkraftmaschine vorgeschlagen, bei dem die Ausgangssignale des Klopfsensors mit einem variablen Referenzpegel verglichen werden, der in Abhängigkeit von vorhergehenden Ausgangssignalen des Klopfsensors gebildet wird. Überschreiten die Klopfsignale einen Pegel, der dem Referenzpegel multipliziert mit einem zylinderselektiven Klopferkennungsfaktor entspricht, wird auf Klopfen erkannt. Überschreitet der Referenzpegel, der so normiert wird, daß er mit größerer werdendem Geräusch der Brennkraftmaschine anwächst, ein erlaubtes Referenzpegelband, wird auf Fehler erkannt. Zur Erhöhung der Zuverlässigkeit der Fehlererkennung wird eine Fehleranzeige nur dann ausgelöst, wenn der Referenzpegel für eine vorgebbare Zeit außerhalb des Referenzpegelbandes liegt.

DE-A-31 28 475 beschreibt eine Kontrolleinrichtung für eine Klopfregelvorrichtung an Brennkraftmaschinen mit einem Klopfsensor und einer nachgeschalteten Auswerteschaltung. Als Diagnosefunktion zum Überprüfen des Klopfsensors wird zyklisch ein Kontrollsignal erzeugt, das die Schwelle zur Klopferkennung absenkt, so daß der Klopfsensor bei normaler Motorfunktion ein Pseudoklopfsignal erzeugt. Wird dieses Pseudoklopfsignal nicht erzeugt, so liegt eine Fehlfunktion des Klopfsensors vor.

Vorteile der Erfindung

Das erfindungsgemäße Verfahren zur Überwachung und Fehlererkennung, insbesonders bei einer Einrichtung zur Klopferkennung bei einer Brennkraftmaschine hat den Vorteil, daß eine weitere Steigerung der Zuverlässigkeit in der Fehlererkennung gegenüber den aus dem Stand der Technik bekannten Lösungen erreicht wird. Erzielt wird dieser Vorteil, indem bei einem Verfahren mit den Merkmalen des Anspruchs 1 zur Fehlererkennung zwei verschiedene Diagnosefunktionen eingesetzt werden und beide Diagnosefunktionen abwechselnd in festen Abständen durchgeführt werden. Sofern eine der beiden Diagnosefunktionen einen Fehler vermuten läßt, wird diese Diagnosefunktion zur Absicherung der Fehlermeldung ein weiteres Mal oder öfters durchgeführt, bevor auf die andere Diagnosefunktion umgeschaltet wird. Bestätigt sich der Fehler, wird auf Fehler erkannt, bestätigt sich der Fehler nicht, wird mit der abwechselnd durchgeführten Diagnose fortgefahren. Die Vorgehensweise wird vorteilhafterweise analog auch bei einer Fehlerheilung eingesetzt. Tritt ein von einer Diagnose bestätigter Fehler nicht mehr auf, wird diese Diagnose zur Bestätigung wenigstens einmal wiederholt, bevor die Fehlerheilung anerkannt wird.

Weitere Vorteile der Erfindung werden mit Hilfe der in den abhängigen Ansprüchen angegebenen Maßnahmen erzielt. Dabei ist vorteilhaft, daß der Abstand zwischen der Durchführung der Diagnosefunktionen als Zeitabstand oder bei Einsatz im Steuergerät einer Brennkraftmaschine auch als Zahl von Verbrennungen oder Arbeitsspielen festgelegt werden kann. Damit läßt sich eine vorteilhafte Anpassung an verschiedene Auswerteverfahren durchführen. Die beiden Diagnosefunktionen enthalten zur sicheren Fehlererkennung separate Entprellzähler, mit denen auch die Dauer der Störung bei der Fehlererkennung mitberücksichtigt werden kann. Bei einem von einer Diagnosefunktion erzeugten Fehlerverdacht werden die Diagnosen nicht mehr abwechselnd durchgeführt, sondern es wird die Funktion, die den Fehlerverdacht erzeugt hat, erneut gestartet und durchlaufen, wobei der Abstand, also der Zeitabstand die Zahl der Verbrennungen oder Arbeitsspiele zwischen zwei Diagnosen gegenüber dem üblichen Wert verringert werden kann. Damit läßt sich in besonders vorteilhafter Weise eine schnelle Bestätigung des Fehlerverdachts oder eine Aufhebung des Fehlerverdachts erzielen, dies gilt insbesondere wenn der Abstand geringer wird. Sobald der Fehler sicher erkannt ist oder der Fehlerverdacht nicht mehr vorliegt, wird wieder in den Normalzustand gewechselt und beide Diagnosefunktionen werden abwechselnd durchlaufen. Dies gilt in vorteilhafter Weise auch für einen erkannten, jedoch wieder geheilten Fehler. Als Diagnosefunktionen werden in besonders vorteilhafter Weise ein Nulltest und ein Testimpuls generiert, die im normalen Zustand beide abwechslungsweise auf die die Auswerteschaltung umgeschaltet werden.

Das erfindungsgemäße Verfahren zur Überwachung und Fehlererkennung läßt sich in besonders vorteilhafter Weise bei einer Einrichtung zur Klopferkennung bei einer Brennkraftmaschine einsetzen.

Zeichnung

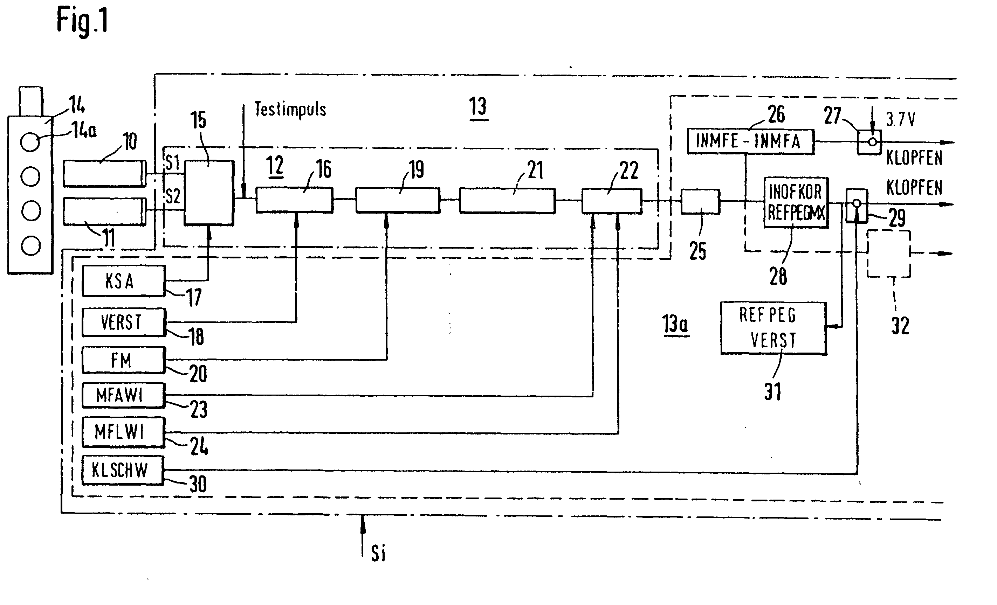

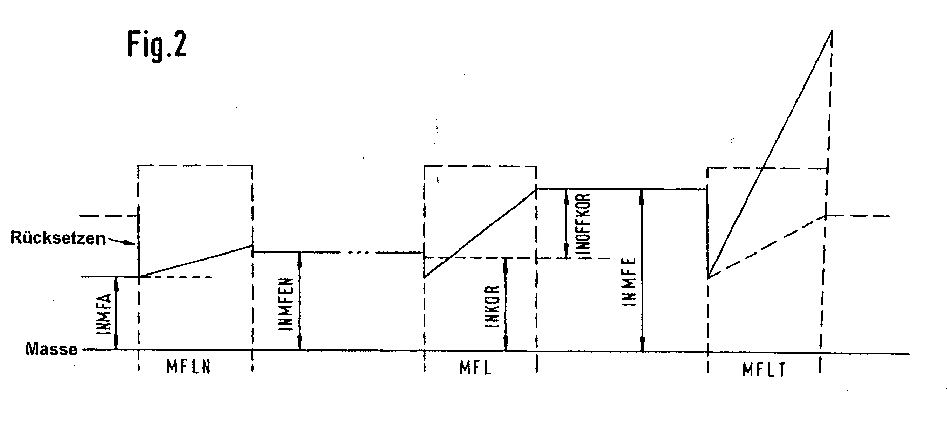

Die Erfindung ist in der Zeichnung dargestellt und wird in der nachfolgenden Beschreibung näher erläutert. Im einzelnen zeigt Figur 1 ein Blockschaltbild einer Klopfausverteschaltung, bei der das erfindungsgemäße Verfahren eingesetzt wird. Figur 2 zeigt einen Meßwerteverlauf über der Zeit.

Beschreibung

In dem in Figur 1 dargestellten Ausführungsbeispiel ist eine Vorrichtung zur Klopferkennung bei einer Brennkraftmaschine mit zwei Klopfsensoren 10, 11 dargestellt, bei der die erfindungsgemäße Fehlererkennung durchgeführt wird. Die Klopfsensoren sind mit einer Auswerteschaltung 12 verbunden, die als integrierter Schaltkreis Bestandteil des Steuergerätes 13 der Brennkraftmaschine ist. Das Steuergerät 13 umfaßt dabei in bekannter Weise wenigstens einen Rechner 13a, Speicher, Ansteuerstufen usw. Dem Steuergerät werden Signale Si bzw. Daten, die es für die Berechnungen benötigt, zugeführt. Beispielhaft ist das Kurbelwellenwinkelsignal und ein Temperatursignal, die von Sensoren geliefert werden, genannt. Die Klopfsensoren 10 und 11 sind den Zylindern 14a einer Brennkraftmaschine 14 zugeordnet. Sie registrieren die Geräusche, die von den Verbrennungsvorgängen in den Zylindern der Brennkraftmaschine verursacht werden und geben entsprechende elektrische Signale S1, S2 an die Auswerteschaltung 12 ab. Die Auswerteschaltung 12 ist als integrierte Schaltung (IC) aufgebaut und wird durch den Rechner 13a des Steuergerätes 13 gesteuert. Im Rechner 13a laufen verschiedene Auswerteprogramme ab, die für das erfindungsgemäße Verfahren benötigten Größen bzw. Steuersignale liefern.

Die Auswerteschaltung 12 umfaßt im einzelnen einen Multiplexer 15, über den wahlweise das Signal S1 des Klopfsensors 10 oder das Signal S2 des Klopfsensors 11 an den Verstärker 16 weitergeleitet wird. Die Auswahl des weitergeleiteten Signals wird vom Steuergerät 13 getroffen, wobei die Umschaltung des Multiplexers 15 vom Steuergerät 13 z. B. in Abhängigkeit vom Zählerstand KSA des Softwarezylinderzählers 17 erfolgt. Der Verstärker 16 ist ein regelbarer Verstärker, dessen Verstärkungsfaktor vom SG bzw. in Abhängigkeit des in Block 18 eingeschriebenen Wertes VERST eingestellt wird. Der Wert VERST wird in einem nicht näher dargestellten, im Rechner 13a laufenden Klopferkennungsprogramm bestimmt.

Das im Verstärker 16 verstärkte Signal wird in einem Bandpaßfilter 19, dessen Mittenfrequenz einstellbar ist, gefiltert. Die Einstellung der Mittenfrequenz des Bandpaßfilters 19 erfolgt vom Steuergerät anhand der im Rechner 13a ermittelten und im Block 20 abgelegten Größe FM, auf deren genaue Berechnung an dieser Stelle nicht näher eingegangen werden soll.

Im Gleichrichter 21 wird das vom Bandpaßfilter 19 gelieferte Signal gleichgerichtet und in dem sich anschließenden Integrator 22 in einem vorgebbaren Meßfenster integriert. Der Beginn des Meßfensters und das Ende des Meßfensters wird durch die in den Blöcken 23 und 24 enthaltenen Größen bestimmt. Diese Größen (Kennfelder) für den Meßfensteranfang MFWWI und die Meßfensterlänge MFLWI werden ebenfalls im Klopferkennungsprogramm berücksichtigt.

Das Ausgangssignal der Auswerteschaltung 12 wird in einem Analog-/Digitalwandler 25, der Bestandteil des Rechners 26 des Steuergerätes ist, digitalisiert. Im Block 26 wird die Differenz zwischen dem Integratorwert am Meßfensterende INMFE und dem Integratorwert am Meßfensteranfang INMFA gebildet. Diese Differenz wird im Block 27 mit einem Schwellwert, beispielsweise einer Spannung von 3,7 V verglichen und sofern die Differenz größer ist als dieser Schwellwert, wird auf Klopfen erkannt und die Bedingung KLOPFEN abgegeben.

Im Block 28 wird der zuvor noch offsetkorrigierte Integratorwert INOFFKOR zu einem Maximalwert REFPEGMX in Bezug gesetzt. Das Ergebnis wird im Block 29 mit der aus der Klopferkennung erhaltenen Größe KLSCHW verglichen. Falls das Vergleichsergebnis größer Null ist, wird ebenfalls auf Klopfen erkannt und die Bedingungen KLOPFEN abgegeben. Der Ausgang des Block 28 dient gleichzeitig als Grundlage für die im Block 31 durchgeführte Referenzpegelberechnung für die nächste Klopferkennung dieses Zylinders. Abhängig vom Ausgang des Blocks 28 wird also der Referenzpegel REFPEG ermittelt, außerdem wird auch der Verstärkungsfaktor VERST bestimmt.

Die gesamte Steuerung der Auswerteschaltung 12, also die Umschaltung des Multiplexers 15 sowie die Festlegung der zylinderindividuellen Eingangsverstärkung im Verstärker 16, das Starten und Stoppen des Integrators 22 sowie die Auswahl der Filtermittenfrequenz des Bandpaßfilters 19 wird ebenso wie die nicht näher beschriebene Signalaufbereitung durch eine im Rechner des Steuergeräts 13 enthaltene Klopferkennungsfunktion realisiert. Die Signalaufbereitung besteht im wesentlichen aus einer Offsetkorrektur der Integratorendwerte. Die Klopferkennung selbst und damit die Berechnung der Größen REFPEG, VERST, KLSCHW und KLOPFEN wird im einzelnen nicht näher beschrieben. Sowohl die Klopferkennung als auch die Berechnung der erwähnten Faktoren läuft im Rechner 13a des Steuergeräts 13 ab, der auch die Überwachung und Fehlererkennung durchführt.

Die in Figur 1 dargestellte Klopferkennungsschaltung mit Überwachung und Fehlererkennung arbeitet wie folgt: Der Rechner 13a des Steuergerätes 13 liest bei jeder Verbrennung den am Ausgang des Integrators 22 anstehenden Integratorwert IW über den Analog-/Digitalwandler 25 ein und berechnet den Klopfentscheidung relevanten offsetkorrigierten Integratorwert INOFFKOR unter Verwendung der folgenden Beziehungen:

$$INOFFKOR = INMFE - INKOR$$

wobei gilt:

$$INKOR = INMFA + (INTST * MFLN).$$

mit:

INMFA: Integratorwert bei Klopfregelung am Meßfensteranfang,

INMFENT: Integrartorwert bei Klopfregelung am Meßfensterende bei Nulltest,

INKOR: Integrator-Offsetkorrektur bei Klopfregelung,

INOFFKOR: Offsetkorrigierter Integratorwert,

INMFE: Integratorwert bei Klopfregelung am Meßfensterende

Diese Integratorwerte werden vom Rechner 13a des Steuergerätes 13 laufend ermittelt und bei der Klopferkennung berücksichtigt.

Zusätzlich zur Klopferkennung führt der Rechner 13a des Steuergerätes 13 auch noch das erfindungsgemäße Verfahren zur Überwachung und Fehlererkennung durch, das im folgenden beschrieben wird. Wesentlich ist, daß zwei unterschiedliche Diagnosefunktionen bzw. Testfunktionen ablaufen, wobei eine der Testfunktionen als Nulltest und die andere als Testimpuls bezeichnet wird. Bei beiden Testfunktionen werden die unter den gegebenen Bedingungen aufgetretenen Integratorwerte ausgewertet. Diese Integratorwerte sind in Figur 2 als Spannungen über Masse (Ground) in Abhängigkeit vom Kurbelwellenwinkel aufgetragen.

Die beiden Diagnosefunktionen Nulltest und Testimpuls werden im Normalfall, also wenn weder ein Fehler noch eine Fehlerheilung festgestellt werden, abwechselnd ausgelöst, wobei sich ein Abstand zwischen den Diagnosefunktionen von 255 Arbeitsspielen als zweckmäßig erwiesen hat. Ist keine der beiden Diagnosefunktionen aktiv, läuft die reguläre Klopferkennung. Sowohl die reguläre Klopferkennung als auch die beiden Testfunktionen werden innerhalb eines kurbelwellenwinkelabhängigen Meßfensters durchgeführt. Der Beginn sowie die Länge des Meßfensters werden vom Rechner 13a des Steuergerätes 13 festgelegt, der dazu das Ausgangssignal eines Kurbelwellenwinkelsensors auswertet.

Zur Durchführung der Nulltestfunktion werden beide Klopfsensoren weggeschaltet, das heißt es wird dem Verstärker 16 kein Ausgangssignal eines Klopfsensors zugeführt. Bei Erreichen des für den Nulltest vorgesehenen Meßfensters MFLN wird ein Reset ausgelöst. Im Integrator 22 stellt sich dann eine Spannung ein, die mit INMFA bezeichnet ist. Diese Spannung am Meßfensteranfang steigt während des Meßfensters MFLN an und erreicht am Ende des Meßfensters einen Wert von INMFEN. Dieser Anstieg der Integratorspannung wird durch vorhandene Offsetspannungen erreicht. Wird die Differenz zwischen der Spannung am Meßfensterende INMFEN und der Spannung am Meßfensteranfang INMFA gebildet, die Differenzbildung erfolgt in Block 27, läßt sich ein Maß gewinnen, das zur Fehlererkennung im Nulltest verwendet wird.

Die Differenz INMFEN-INMFA wird einem Vergleicher 32 zugeführt, der bei abweichen der Differenz von einem vorgebbaren Wert auf einen Fehler erkennt. Der Vergleicher 32 ist im übrigen so ausgelegt, daß er auch noch andere, später erläuterte Vergleiche durchführen kann.

Bei der Durchführung der Testimpulsfunktion wird nach dem Multiplexer 15 ein Testimpuls eingespeist. Dieser Testimpuls wird vom Steuergerät generiert, beispielsweise durch Zuschalten einer Spannungsquelle. Der Einfluß des Testimpulses auf die nachfolgende Auswerteschaltung wird.zur Fehlererkennung ausgewertet.

Nach Einspeisung des Testpulses wird der Inhalt des Integrators 22 bei ordnungsgemäßer Funktionsfähigkeit wesentlich schneller ansteigen als bei einer regulären Klopferkennung. In Figur 2 ist dargestellt, wie sich der Integratorinhalt bei der regulären Klopferkennung im Meßfenster MFL verändert und wie er sich im Meßfenster MFLT verändert. Bei der regulären Klopferkennung erfolgt zu Beginn des Meßfensters MFL ein Reset. Während des Meßfensters wächst die Integratorspannung auf einen Wert von INMFE an. Dieser Wert setzt sich zusammen aus den Spannungen INKOR und INOFFKOR. Der Integratorwert am Ende des Meßfensters MFL ist letztendlich ein Maß dafür, ob Klopfen aufgetreten ist oder nicht.

Wird zu Beginn des Meßfensters MFLT nach dem Reset ein Testpuls eingespeist, steigt die Spannung, auf die sich der Integrator 22 lädt auf einen Wert an, der gegenüber dem Wert INMFE deutlich erhöht ist. Der Vergleich der Integratorspannung am Ende des Meßfensters DMFLT mit einem vorgebbaren Wert, der gegebenenfalls ein Spannungspegel, die bei regulärer Klopferkennung erreicht werden, anpaßbar ist, läßt sich ein Fehler erkennen, wenn das Vergleichsergebnis nicht dem erwarteten Wert entspricht.

Zur Fehlererkennung kann bei der Testimpulsdiagnose insbesonders der Vergleich des Spannungsanstiegs im Meßfenster MFLT mit dem Spannungsanstieg im Meßfenster MFL verwendet werden. Erfüllt dieser Spannungsanstieg nicht eine vorgebbare Bedingung, wird auf Fehler erkannt.

Wird nach der Durchführung einer der beiden Diagnosen . Nulltest oder Testimpuls bei einer dieser Diagnosen ein Fehlerverdacht generiert oder wird bei zuvor als sicher erkannten Fehler eine Fehlerheilung vermutet, werden die beiden Diagnosen Nulltest und Testimpuls nicht mehr abwechselnd abgearbeitet, sondern es wird der Test, der den Fehlerverdacht generiert hat oder der Test, der die Fehlerheilung vermuten läßt, noch einmal durchgeführt, bis sich die Fehlererkennung bestätigt hat oder die Fehlerheilung verifiziert ist. Die Wiederholung der Diagnosefunktion, wie die Fehlererkennung bzw. Fehlerheilung vermuten läßt, kann in einer Ausführungsform bereits früher als üblich wiederholt werden. Beispielsweise bereits nach 120 Arbeitsspielen. Dadurch wird sichergestellt, daß die Fehlererkennung aus den Fehlerverdacht bzw. die Fehlerheilung aus der vermuteten Fehlerheilung schnell erfolgen kann.

Bestätigt sich ein Fehlerverdacht in der wiederholten Diagnosefunktion, wird der Fehlerverdacht in einen definitiv erkannten Fehler umgewandelt. Anschließend kann die Durchführung der Diagnosefunktionen wieder abwechslungsweise erfolgen, bis sich ein Fehlerheilungsverdacht ergibt.

Die Erfindung wurde anhand einer Einrichtung zur Klopferkennung mit Diagnose beschrieben, sie läßt sich beispielsweise bei einem derzeit im Einsatz befindlichen Klopferkennungs-IC mit der Bezeichnung CC195 einsetzen. Das Prinzip des Verfahrens zur Überwachung und Fehlererkennung mit zwei unterschiedlichen Diagnosefunktionen, die üblicherweise abwechslungsweise ablaufen und nur bei Fehlerverdacht oder bei Fehlerheilungsverdacht zur Sicherung wiederholt werden, läßt sich generell bei allen Prozessen einsetzen, bei denen eine Überwachung oder Fehlererkennung erforderlich ist.

**Patentansprüche**

1. Verfahren zur Überwachung und Fehlererkennung, insbesonders bei einer Einrichtung zur Klopferkennung, mit einer Diagnosefunktion, die zumindest zeitweilig durchgeführt wird, **dadurch gekennzeichnet, daß** zusätzlich eine andere Diagnosefunktion durchgeführt wird und beide Diagnosefunktionen abwechselnd in festen Abständen durchgeführt werden und daß bei vermuteter Fehlererkennung oder bei vermuteter Fehlerheilung die Diagnosefunktion, die einen Fehler vermuten läßt, zur Absicherung wenigstens ein weiteres Mal durchgeführt wird, bevor die andere Diagnosefunktion durchgeführt wird.

2. Verfahren zur Überwachung und Fehlererkennung nach Anspruch 1, **dadurch gekennzeichnet, daß** eine Diagnosefunktion einen Nulltest umfaßt und die andere Diagnosefunktion mittels eines einspeisbaren Testimpulses, durchgeführt wird, wobei beide Diagnosefunktionen durch entsprechende Ansteuerungen in der zugehörigen Auswerteschaltung ausgelöst werden.

3. Verfahren zur Überwachung und Fehlererkennung nach Anspruch 1 oder 2, **dadurch gekennzeichnet, daß** es in einer Recheneinrichtung eines Steuergerätes einer Brennkraftmaschine abläuft und in Verbindung mit der Auswertung von Sensorsignalen der Brennkraftmaschine eingesetzt wird.

4. Verfahren zur Überwachung und Fehlererkennung nach einem der vorhergehenden Ansprüche, **dadurch gekennzeichnet, daß** der Abstand zwischen zwei aufeinanderfolgenden Diagnosefunktionen eine Zeit oder eine Zahl von Verbrennungen oder von Arbeitstakten ist.

5. Verfahren zur Überwachung und Fehlererkennung nach einem der vorhergehenden Ansprüche, **dadurch gekennzeichnet, daß** ein Fehler nur dann erkannt wird, wenn der Entprellzähler, der der zugehörigen Diagnosefunktion zugeordnet ist, einen vorgebbaren Zählerstand aufweist.

6. Verfahren zur Überwachung und Fehlererkennung nach einem der vorhergehenden Ansprüche, **dadurch gekennzeichnet, daß** bei Nichtbestätigung des Fehlerverdachts oder nach erkannter Fehlerheilung auf die normale Abfolge der Diagnosefunktionen übergegangen wird.

7. Verfahren zur Überwachung und Fehlererkennung nach einem der vorhergehenden Ansprüche, **dadurch gekennzeichnet, daß** bei vermuteter Fehlererkennung dieselbe Diagnose in anderem Abstand, insbesondere kürzerem Abstand durchgeführt wird.

**Claims**

1. Method for monitoring and fault detection, in particular in a device for knock detection, having a diagnosis function which is carried out at least from time to time, **characterized in that** a further diagnosis function is additionally carried out and the two diagnosis functions are carried out alternately at fixed intervals, and **in that**, in the event of suspected fault detection or in the event of suspected fault elimination, the diagnosis function which causes a fault to be suspected is carried out at least one further time for safety reasons before the other diagnosis function is carried out.

2. Method for monitoring and fault detection according to Claim 1, **characterized in that** a diagnosis function comprises a zero test and the other diagnosis function is carried out by means of a test pulse which can be supplied, both diagnosis functions being triggered by appropriate actuation processes in the associated evaluation circuit.

3. Method for monitoring and fault detection according to Claim 1 or 2, **characterized in that** it is performed in a computing unit of a control device of an internal combustion engine and is used in conjunction with the evaluation of sensor signals of the internal combustion engine.

4. Method for monitoring and fault detection according to one of the preceding claims, **characterized in that** the interval between two successive diagnosis functions is a time period or a number of combustion processes or of work cycles.

5. Method for monitoring and fault detection according to one of the preceding claims, **characterized in that** a fault is detected only when the debounce counter which is assigned to the associated diagnosis function has a predeterminable counter reading.

6. Method for monitoring and fault detection according to one of the preceding claims, **characterized in that** a transition is made to the normal sequence of diagnosis functions if the fault suspicion is not confirmed or if fault elimination is detected.

7. Method for monitoring and fault detection according to one of the preceding claims, **characterized in that**, in the event of suspected fault detection, the same diagnosis is carried out at a different interval, in particular at a shorter interval.

**Revendications**

1. Procédé de surveillance et de détection de défaut, notamment pour un dispositif de détection de cliquetis, comprenant une fonction de diagnostic qui est exécutée du moins temporairement,
   **caractérisé en ce qu'**
   encore une autre fonction de diagnostic est exécutée, les deux fonctions de diagnostic étant exécutées en alternance à des intervalles fixes, et en cas d'une détection de défaut supposée ou d'une suppression de défaut supposée, pour plus de sécurité la fonction de diagnostic laissant supposer un défaut est exécutée au moins une fois à nouveau, avant l'exécution de l'autre fonction de diagnostic.

2. Procédé de surveillance et de détection de défaut selon la revendication 1,
   **caractérisé en ce qu'**
   une fonction de diagnostic comprend un test à zéro et l'autre fonction de diagnostic est exécutée au moyen d'une impulsion de test fournie, les deux fonctions de diagnostic étant déclenchées par des commandes appropriées dans le circuit d'exploitation associé.

3. Procédé de surveillance et de détection de défaut selon la revendication 1 ou 2,
   **caractérisé en ce qu'**
   il se déroule dans un calculateur d'un appareil de commande d'un moteur à combustion interne et qu'il est utilisé en relation avec l'exploitation de signaux de capteur du moteur à combustion interne.

4. Procédé de surveillance et de détection de défaut selon l'une quelconque des revendications précédentes,
   **caractérisé en ce que**
   l'intervalle entre deux fonctions de diagnostic successives est une durée ou un nombre de combustions ou de cycles de travail.

5. Procédé de surveillance et de détection de défaut selon l'une quelconque des revendications précédentes,
   **caractérisé en ce qu'**
   un défaut n'est détecté que lorsque le compteur antibattement associé à la fonction de diagnostic correspondante présente un état de compteur pouvant être prédéterminé.

6. Procédé de surveillance et de détection de défaut selon l'une quelconque des revendications précédentes,
   **caractérisé en ce que**
   si le soupçon de défaut n'est pas confirmé ou si une suppression de défaut est détectée, on passe au déroulement normal des fonctions de diagnostic.

7. Procédé de surveillance et de détection de défaut selon l'une quelconque des revendications précédentes,
   **caractérisé en ce qu'**
   en cas d'une détection de défaut supposée le même diagnostic est exécuté dans un autre intervalle, notamment un intervalle plus court.

# Fig.1

Testimpuls

14
14a
10
15
S1
S2
12
16
19
21
22
25
13
13a

26
INMFE - INMFA
27
3.7V
KLOPFEN
KLOPFEN

11

KSA 17
VERST 18
FM 20
MFAWI 23
MFLWI 24
KLSCHW 30

INOFKOR
REFPEGMX
28

29
32

REFPEG
VERST
31

Si

EP 0 960 324 B1

## Fig.2